# EUROPEAN PATENT APPLICATION

(11) **EP 1 426 260 A1**
(43) Date of publication of application: **09.06.2004**
(21) Application number: 03257545.8
(22) Date of filing: 01.12.2003
(51) Int. Cl.: B60T 8/40, F04B 1/04

(54) **Pump for anti-lock brake systems**

(30) Priority: 06.12.2002 KR 2002077190; 06.12.2002 KR 2002077191; 06.12.2002 KR 2002077192
(71) Applicant: Mando Corporation, Pyungtaek-si, Kyongki-do (KR)
(72) Inventor: Yang, I-Jin, Pyungteak-City Kyonggi-Do (KR)
(74) Representative: Pratt, David Martin

(57) **Abstract**

A pump for anti-lock brake systems which is constructed so that a piston (40), an inlet check valve (100), and an outlet check valve (200) are integrally assembled with each other and are mounted in a bore (3), thus enhancing an assembling efficiency and brake oil suction performance of the pump. In the pump, the piston (40) reciprocates by a motor (2), the inlet check valve (100) is provided at an end of the piston (40), and the outlet check valve (200) is mounted to a plug (50) which closes the bore of a modulator block (1). The piston (40) is set in a sleeve (60,70) while the inlet check valve (100) is mounted to the end of the piston (40), and the sleeve (60,70) is fitted into the plug (50) to which the outlet check valve (200) is mounted, so that the piston (40), the inlet check valve (100), and the outlet check valve (200) are integrally assembled.

## Description

### CROSS-REFERENCE TO RELATED APPLICATIONS

This application claims the benefit of Korean Patent Application No. 2002-77190 filed on December 6, 2002 and Korean Patent Application No. 2002-77191 filed on December 6, 2002 and Korean Patent Application No. 2002-77192 filed on December 6, 2002 in the Korean Intellectual Property Office, the disclosures of which are incorporated herein by reference.

This application claims the benefit of Korean Patent Application No. 2002-77190, filed December 6, 2002 in the Korean Intellectual Property Office, the disclosure of which is incorporated herein by reference.

### BACKGROUND OF THE INVENTION

### 1. Field of the Invention

The present invention relates, in general, to anti-lock brake systems and, more particularly, to a pump for anti-lock brake systems which is constructed so that a piston and an inlet check valve are integrally assembled with each other, thus being easy to assemble, and enhancing brake oil suction performance.

### 2. Description of the Related Art

Generally, anti-lock brake systems function to efficiently prevent wheels from slipping on a road when a vehicle brakes, thus achieving a superior braking force. The anti-lock brake system includes a plurality of solenoid valves, a low-pressure accumulator, a high-pressure accumulator, a motor, a pump, and an electronic control unit (ECU). The plurality of solenoid valves control brake oil which is transferred to hydraulic brakes that are mounted to the wheels of the vehicle. The low-pressure accumulator and the high-pressure accumulator temporarily store the brake oil therein. The motor and the pump forcibly pump the brake oil from the low-pressure accumulator which temporarily stores the brake oil. The ECU controls operations of the solenoid valves and the motor. The solenoid valves, the low-pressure accumulator, the high-pressure accumulator, the motor, the pump, and the ECU are embedded in an aluminum modulator block to provide a compact structure.

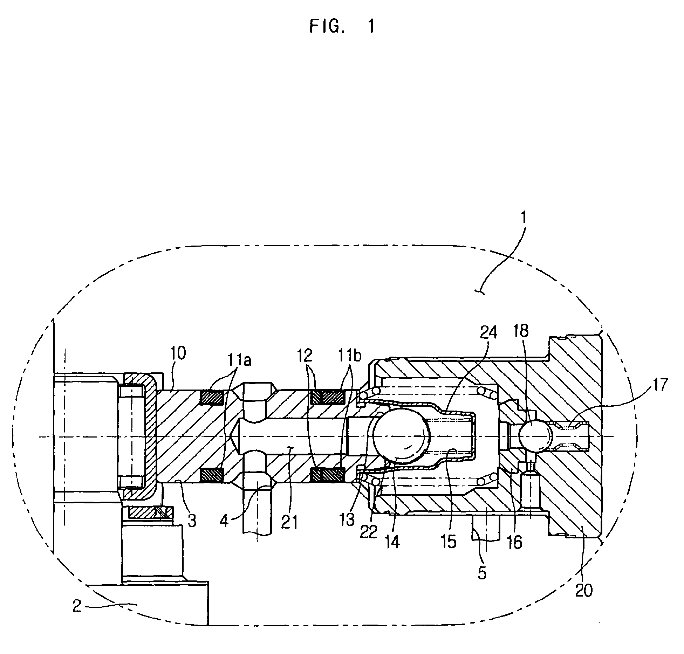

A low-pressure brake oil contained in the low-pressure accumulator is pressurized and pumped into the high-pressure accumulator by the pump. The brake oil contained in the high-pressure accumulator is transferred to the hydraulic brakes or a master cylinder assembly of the anti-lock brake system. In this case, the pump is driven by the motor. FIG. 1 shows a conventional pump for anti-lock brake systems.

Referring to FIG. 1, the conventional pump for anti-lock brake systems includes a plug 20 and a piston 10. The plug 20 closes an end of a bore 3 which is provided in a predetermined portion of the modulator block 1. The piston 10 is provided in the bore 3 to reciprocate by a rotation of an eccentric shaft of a motor 2, with an inlet path 21 provided in the piston 10.

At an end of the piston 10 are provided an inlet seat 22, an inlet check ball 14, a retainer 24 and a support spring 15. The inlet check ball 14 opens or closes an outlet of the inlet path 21 according to a position of the piston 10. The retainer 14 and the support spring 15 bias the inlet check ball 14 to the inlet valve seat 22.

In the plug 20 are provided an outlet check ball 18 and a support spring 17. The outlet check ball 18 opens or closes an outlet valve seat 16, according to the position of the piston 10. The support spring 17 biases the outlet check ball 18 to the outlet valve seat 16.

Further, first and second sealing members 11a and 11b are provided on an outer circumferential surface of the piston 10 to prevent the brake oil from leaking through a gap between the piston 10 and the bore 3. A backup ring 12 is provided around the piston 10 to contact with the second sealing member 11b, thus preventing the second sealing member 11b from being excessively worn out.

An inlet port 4 and an outlet port 5 are provided on predetermined portions of the modulator block 1. The inlet port 4 makes an inlet of the inlet path 21 communicate with a low-pressure accumulator (not shown). The outlet port 5 makes an outlet side of the outlet check ball 18 communicate with a high-pressure accumulator (not shown).

In the conventional pump, as the eccentric shaft of the motor 2 rotates, the piston 10 reciprocates in the bore 3 while varying a pressure in the bore 3. By the variation in the pressure of the bore 3, the inlet check ball 14 and the outlet check ball 18 are alternately opened. At this time, the brake oil is pressurized while being pumped into the high-pressure accumulator.

However, in the conventional pump for anti-lock brake systems, the piston 10, the inlet check ball 14 and the support spring 15 and the retainer 24 which are provided at an end of the piston 10, are separately mounted in the bore 3 of the modulator block 1, and further the piston 10 and the plug 20 are separately mounted in the bore 3 of the modulator block 1, thus the assembling process of the elements of the pump is complicated and lengthy.

In a detailed description, when it is required to set the conventional pump for anti-lock brake systems in the modulator block 1, first, the piston 10 is fitted into the bore 3. In such a state, the inlet check ball 14, the support spring 15, and the retainer 24 are placed on the end of the piston 10. Subsequently, the plug 20 into which the outlet valve seat 16, the outlet check ball 18, and the support spring 17 are fitted, is mounted in the bore 3 of the modulator block 1. Therefore, the conventional pump for anti-lock brake systems has a problem in that the assembling process of the elements of the pump is complicated and lengthy.

### SUMMARY OF THE INVENTION

Accordingly, it is an aspect of the present invention to provide a pump for anti-lock brake systems, which is constructed so that a piston, an inlet check valve, and an outlet check valve are integrally assembled with each other and mounted in a bore of a modulator block, thus enhancing an assembling efficiency and brake oil suction performance of the pump.

Additional aspects and/or advantages of the invention will be set forth in part in the description which follows and, in part, will be obvious from the description, or may be learned by practice of the invention.

The above and/or other aspects are achieved by a pump for anti-lock brake systems, which includes a motor installed in a bore that is provided in a predetermined portion of a modulator block, a plug mounted to an end of the bore to be opposite to the motor, a piston provided in the bore to reciprocate in the bore by the motor, and a sleeve fitted into the bore to guide a reciprocating motion of the piston.

The piston may include a low-pressure piston part provided at a predetermined position which is adjacent to the motor, and a high-pressure piston part extending from the low-pressure piston part toward the plug. An inlet path may be provided between the low-pressure piston part and the high-pressure piston part, and along the high-pressure piston part.

The sleeve may have, around an outer circumferential surface thereof, a step, so that the sleeve is integrally fitted into the plug while surrounding an outer circumferential surface of the high-pressure piston part, and is mounted in the bore along with the plug.

The pump may further include a stop flange which is provided at an end of the sleeve to be bent toward the high-pressure piston part.

The pump may further include a stop part which is provided at an end of the sleeve, and is thinner than the sleeve to be bent toward the high-pressure piston part.

The low-pressure piston part may have a smaller diameter than the high-pressure piston part.

The pump may further include an inlet check valve which is provided at an end of the high-pressure piston part. The inlet check valve and the piston may be integrally assembled with the sleeve and mounted in the bore.

The sleeve may have, around an outer circumferential surface thereof, a step, so that the sleeve surrounds an outer circumferential surface of the lower-pressure piston part and an outer circumferential surface of the high-pressure piston part while being integrally fitted into the plug, and is mounted in the bore.

The pump may further include a stop flange which is provided at an end of the sleeve to be bent toward the low-pressure piston part.

The pump may further include at least one groove which is provided around the outer circumferential surface of the sleeve so that a sealing member is fitted over the groove.

The low-pressure piston part and the high-pressure piston part may be separately fabricated and be fitted into the sleeve.

The low-pressure piston part and the high-pressure piston part may have a same outer diameter and be fitted into the sleeve having a linear inner circumferential surface.

The pump may further include an inlet hole which is provided on the sleeve at a position corresponding to an intermediate part between the low-pressure piston part and the high-pressure piston part, to communicate with the inlet path. The sleeve may be grooved on a portion around the inlet hole.

### BRIEF DESCRIPTION OF THE DRAWINGS

These and other aspects and advantages of the invention will become apparent and more readily appreciated from the following description of the preferred embodiments, taken in conjunction with the accompanying drawings of which:
FIG. 1 is a sectional view of a conventional pump for anti-lock brake systems;
FIG. 2 is a sectional view of a pump for anti-lock brake systems, according to a first embodiment of the present invention;
FIG. 3 is a sectional view of a pump for anti-lock brake systems, according to a modification of FIG. 2;
FIG. 4 is a sectional view of a pump for anti-lock brake systems, according to a second embodiment of the present invention;
FIG. 5 is a sectional view of a pump for anti-lock brake systems, according to a first modification of FIG. 4;
FIG. 6 is a sectional view of a pump for anti-lock brake systems, according to a second modification of FIG. 4;
FIG. 7 is a sectional view of a pump for anti-lock brake systems, according to a third embodiment of the present invention;
FIG. 8 is a sectional view of a pump for anti-lock brake systems, according to a first modification of FIG. 7; and
FIG. 9 is a sectional view of a pump for anti-lock brake systems, according to a second modification of FIG. 7.

### DETAILED DESCRIPTION OF THE PREFERRED EMBODIMENTS

Reference will now be made in detail to the present preferred embodiments of the present invention, examples of which are illustrated in the accompanying drawings, wherein like reference numerals refer to like elements throughout. The embodiments are described below in order to explain the present invention by referring to the figures.

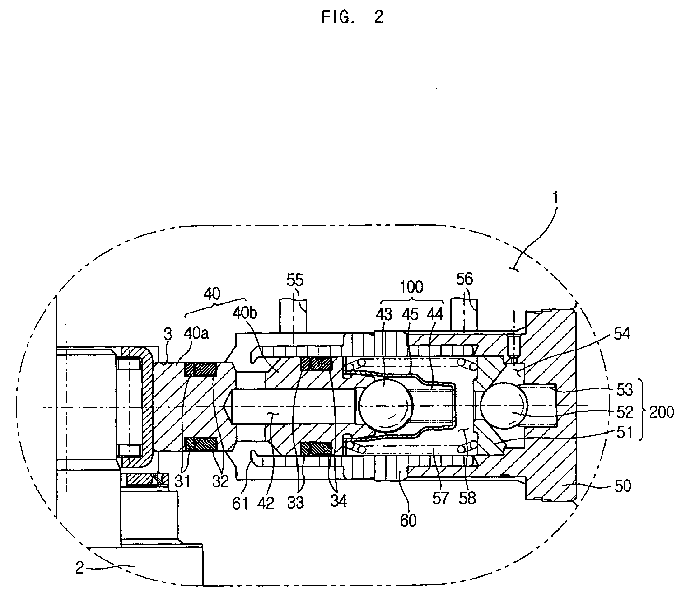

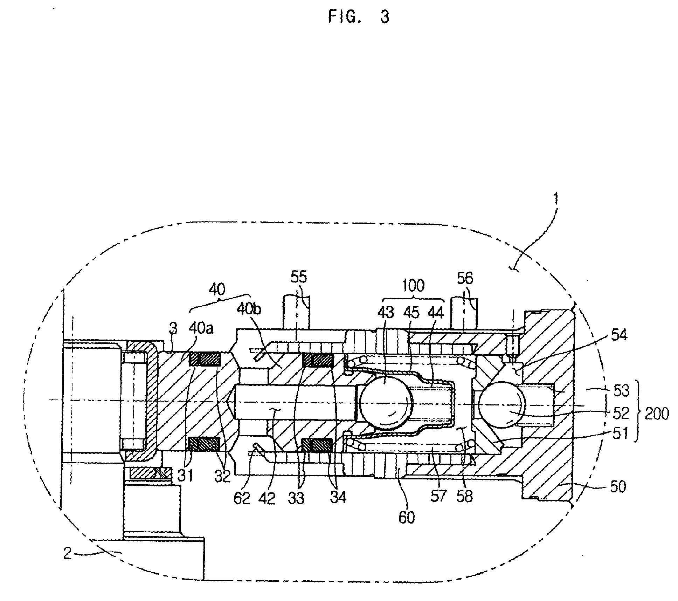

FIG. 2 is a sectional view of a pump for anti-lock brake systems, according to a first embodiment of the present invention, and FIG. 3 is a sectional view of a pump for anti-lock brake systems, according to a modification of FIG. 2. The pump for anti-lock brake systems which is constructed as shown in FIG. 2, will be described in the following.

The pump according to the first embodiment of the present invention has a motor 2 and a piston 40 which are installed in a bore 3 that is provided in a predetermined portion of a modulator block 1. A plug 50 is fitted into an end of the bore 3 to be opposite to the motor 2.

The piston 40 includes a low-pressure piston part 40a which is placed to contact with an eccentric shaft of the motor 2, and a high-pressure piston part 40b which integrally extends from the low-pressure piston part 40a toward the plug 50. The piston 40 linearly reciprocates in the bore 3 by an eccentric rotation of the eccentric shaft which is connected to the motor 2. The low-pressure piston part 40a has a smaller diameter than the high-pressure piston part 40b. An inlet path 42 is provided between the low-pressure piston part 40a and the high-pressure piston part 40b, and along the high-pressure piston part 40b.

On an outer circumferential surface of the low-pressure piston part 40a is provided a first groove. A low-pressure part sealing member 32 and a low-pressure part backup ring 31 are fitted over the groove. The low-pressure part sealing member 32 prevents brake oil from leaking through a gap between the bore 3 and the outer circumferential surface of the low-pressure piston part 40a. The low-pressure part backup ring 31 prevents the low-pressure part sealing member 32 from being excessively worn out.

Similarly, a high-pressure part sealing member 34 and a high-pressure part backup ring 33 are fitted over a second groove which is provided on an outer circumferential surface of the high-pressure piston part 40b. The high-pressure part sealing member 34 prevents the brake oil from leaking through a gap between the bore 3 and the outer circumferential surface of the high-pressure piston part 40b. The high-pressure part backup ring 33 prevents the high-pressure part sealing member 34 from being excessively worn out.

To an end of the high-pressure piston part 40b which faces the plug 50 is mounted an inlet check valve 100. The inlet check valve 100 includes an inlet check ball 43 which opens or closes the inlet path 42, and a support spring 44 and a retainer 45 which support the inlet check ball 43. The retainer 45 is fitted over a stepped portion which is provided on the end of the high-pressure piston part 40b. The support spring 44 is placed between the retainer 45 and the inlet check ball 43 to elastically bias the inlet check ball 43 toward the inlet path 42.

An outlet check valve 200 is mounted to a predetermined portion of the plug 50. The outlet check valve 200 includes a valve seat 51 which is fitted into the plug 50 to define a outlet path 54, an outlet check ball 52 which opens or closes the outlet path 54, and a support spring 53 which elastically biases the outlet check ball 52 toward the valve seat 51.

Further, a return spring 57 is provided between the high-pressure piston part 40b and the valve seat 51 of the outlet check valve 200, thus elastically biasing the piston 40 toward the motor 2.

The pump further includes a sleeve 60 which is provided in the bore 3 to guide a reciprocating motion of the piston 40. Further, the piston 40, the inlet check valve 100, and the outlet check valve 200 are integrally assembled with the sleeve 60, and are mounted in the bore 3.

The sleeve 60 has a length enough to house both the high-pressure piston part 40b of the piston 40 and the inlet check valve 100 therein. At a first end of the sleeve 60 which is adjacent to the motor 2 is provided a stop flange 61 to be bent toward the high-pressure piston part 40b. An intermediate portion of an outer circumferential surface of the sleeve 60 is in close contact with the bore 3. The sleeve 60 has an outer stepped portion at a second end thereof which is opposite to the stop flange 61, so that the outer stepped portion of the sleeve 60 engages with an internal stepped portion of the plug 50 in a press-fitting method. In this way, the sleeve 60 is assembled with the plug 50.

The stop flange 61 allows the piston 40 and the inlet check valve 100 to be integrally assembled with each other. Further, the stop flange 61 prevents the piston 40 from moving beyond the stop flange 61, when the pump operates.

As described above, the low-pressure piston part 40a has the smaller diameter than the high-pressure piston part 40b which is fitted into the sleeve 60. Thus, when the brake oil enters the inlet of the inlet path 42 which is provided between the low-pressure piston part 40a and the high-pressure piston part 40b, a larger amount of brake oil flows to the high-pressure piston part 40b, in comparison with the low-pressure piston part 40a. Thereby, the larger amount of brake oil flows to the inlet check valve 100, thus increasing an amount of brake oil drawn into the pump, therefore enhancing brake oil suction performance.

By the sleeve 60 which is constructed as described above, the piston 40, the plug 50, the inlet check valve 100, and the outlet check valve 200 are integrally assembled with each other, and are mounted in the bore 3 of the modulator block 1.

In a detailed description, after the inlet check ball 43 and the support spring 44 are set in the retainer 45, the stepped end of the high-pressure piston part 40b is fitted into the retainer 45. In this way, the inlet check valve 100 is mounted to the piston 40.

Next, the high-pressure piston part 40b of the piston 40 to which the inlet check valve 100 is mounted, is assembled with the sleeve 60. While the return spring 57 is fitted over the end of the high-pressure piston part 40b, the second end of the sleeve 60 having the stepped portion engages with the stepped portion of the plug 50 to which the outlet check valve 200 is mounted. Thus, the sleeve 60 to house both the piston 40 and the inlet check valve 100 therein, is integrally assembled with the plug 50 to house the outlet check valve 200 therein.

When the sleeve 60 and the plug 50 which are assembled with each other as described above, are fitted into the bore 3 of the modulator block 1, the piston 40, the inlet check valve 100, and the outlet check valve 200 are easily mounted in the bore 3.

The pump for anti-lock brake systems according to the modification of the first embodiment will be described in the following with reference to FIG. 3. The pump of FIG. 3 is different from the pump of FIG. 2 in that the low-pressure piston part 40a and the high-pressure piston part 40b of the piston 40 have a same outer diameter, and a stop part 62 provided at an end of the sleeve 60 which is adjacent to the low-pressure piston part 40a is thinner than the sleeve 60, thus being easily bent.

Since the low-pressure piston part 40a and the high-pressure piston part 40b have the same outer diameter, the piston 40 is easily fabricated. Further, the stop part 62 which is provided at the end of the sleeve 60 is thin, so that the stop part 62 is easily bent toward the high-pressure piston part 40b after the piston 40 and the inlet check valve are set in the sleeve 60.

Since the general construction of the pump shown in FIG. 3 remains the same as the pump of FIG. 2, except for the above-mentioned construction, the general construction of the pump of FIG. 3 will not be described in detail.

The operation of the pumps for anti-lock brake systems according to the first embodiment of the present invention will be described in the following.

First, when the piston 40 moves toward the plug 50 by the eccentric shaft which is connected to the motor 2 and reaches a top dead center, the inlet check ball 43 closes the inlet path 42, and thereby the pressure of the brake oil in a pressure chamber 58 between the inlet check valve 100 and the outlet check valve 200 is increased. At this time, the outlet check ball 52 moves backward while the outlet path 54 is open. Thus, the brake oil contained in the pressure chamber 58 is discharged to the outlet port 56 of the modulator block 1.

Conversely, when the piston 40 moves toward the motor 2 and reaches a bottom dead center, the outlet check ball 52 closes the outlet path 54 and thereby a negative pressure is generated in the pressure chamber 58. Thus, the inlet check ball 43 opens the inlet path 42 and the brake oil is drawn into the inlet path 42 through an inlet port 55 of the modulator block 1.

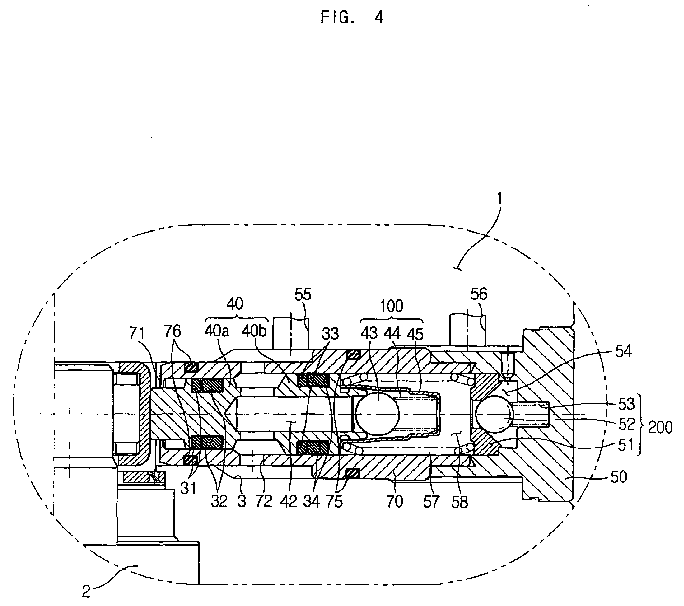

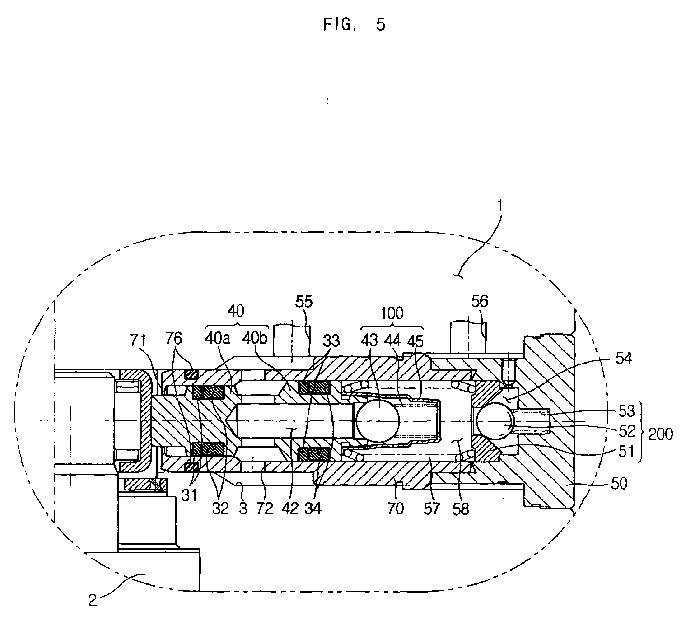

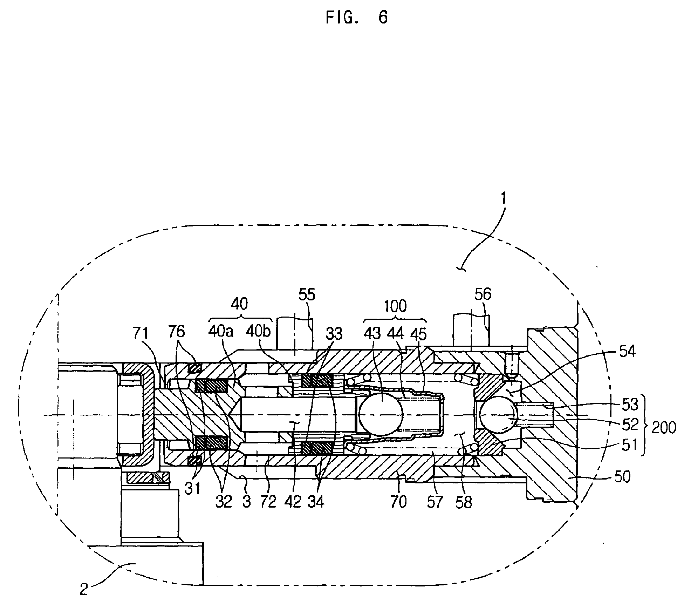

FIG. 4 is a sectional view of a pump for anti-lock brake systems, according to a second embodiment of the present invention. FIG. 5 is a sectional view of a pump for anti-lock brake systems, according to a first modification of FIG. 4. FIG. 6 is a sectional view of a pump for anti-lock brake systems, according to a second modification of FIG. 4. The pump for anti-lock brake systems according to the second embodiment of the present invention will be described in the following with reference to FIG. 4.

The piston 40 having the low-pressure piston part 40a and the high-pressure piston part 40b, is mounted in the bore 3 of the modulator block 1. The high-pressure piston part 40b has a slightly larger diameter than the low-pressure piston part 40a, with the inlet check valve 100 mounted to an end of the high-pressure piston part 40b. The plug 50 to which the outlet check valve 200 is mounted, is fitted into the end of the bore 3 to be opposite to the motor 2, thus closing the bore 3.

The piston 40 and the plug 50 are integrally assembled with each other by a sleeve 70. The sleeve 70 has a length enough to house the low-pressure piston part 40a, the high-pressure piston part 40b, and the inlet check valve 100 therein. At an end of the sleeve 70 which is adjacent to the motor 2 is provided a stop flange 71 to be bent toward the low-pressure piston part 40a. Further, grooves are provided around an outer circumferential surface of the sleeve 70. First and second sealing members 75 and 76 are respectively fitted over the associated grooves of the sleeve 70, thus preventing the brake oil from leaking through a gap between the bore 3 and the outer circumferential surface of the sleeve 70.

The sleeve 70 further includes a stepped portion at an end thereof opposite to the stop flange 71. The stepped portion of the sleeve 70 is fitted into the stepped portion of the plug 50 in the press-fitting method, so that the sleeve 70 is easily assembled with the plug 50.

An inlet hole 72 is provided on the sleeve 70 at a position corresponding to the inlet of the inlet path 42 which is formed between the low-pressure piston part 40a and the high-pressure piston part 40b. Thus, the brake oil flows into the inlet path 42 through both the inlet port 55 provided on a predetermined portion of the modulator block 1 and the inlet hole 72.

Since the general construction of the pump of FIG. 4 remains the same as the pump of FIG. 2, except for the construction of the sleeve 70, the general construction of the pump of FIG. 4 will not be described in detail.

The general construction of the pump shown in FIG. 5 remains the same as the pump of FIG. 4, except that one sealing member 76 is mounted on the outer circumferential surface of the sleeve 70 at a position corresponding to the low-pressure piston part 40a. Thus, the pump of FIG. 5 operates in the same manner as the pump of FIG. 4.

The general construction of the pump shown in FIG. 6 remains the same as the pump of FIG. 5, except that the low-pressure piston part 40a and the high-pressure piston part 40b of the piston 40 are separable from each other, thus it is easier to fabricate the piston 40. Because the low-pressure piston part 40a and the high-pressure piston part 40b are separable from each other, the low-pressure piston part 40a and the high-pressure piston part 40b may be separately fitted into the sleeve 70. Even though the low-pressure piston part 40a and the high-pressure piston part 40b are separately fitted into the sleeve 70 as such, the pump operates in the same manner as the pump of FIG. 5.

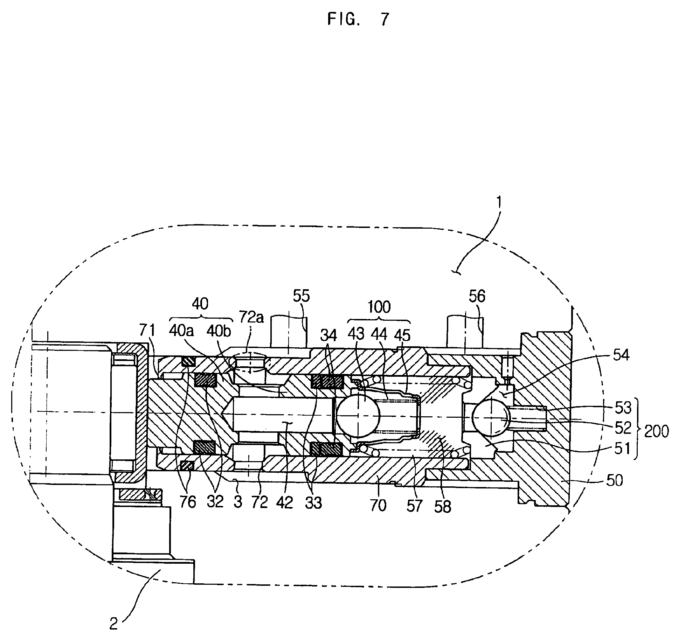

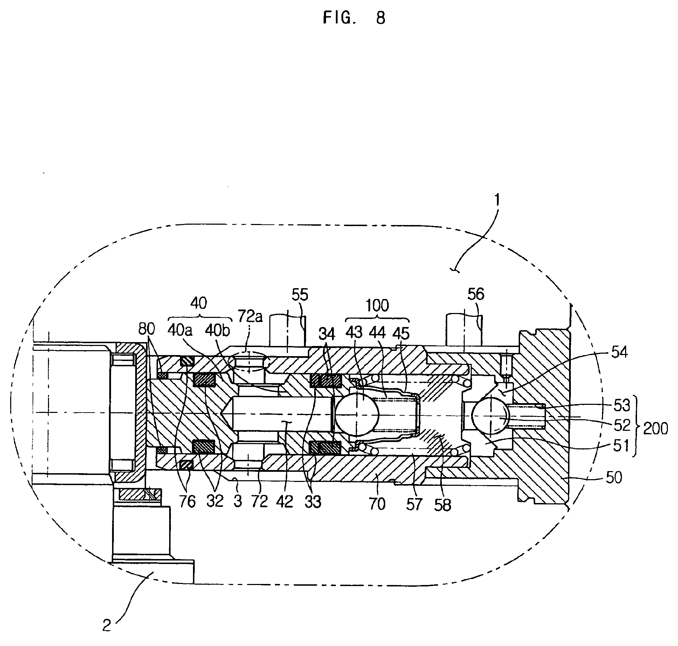

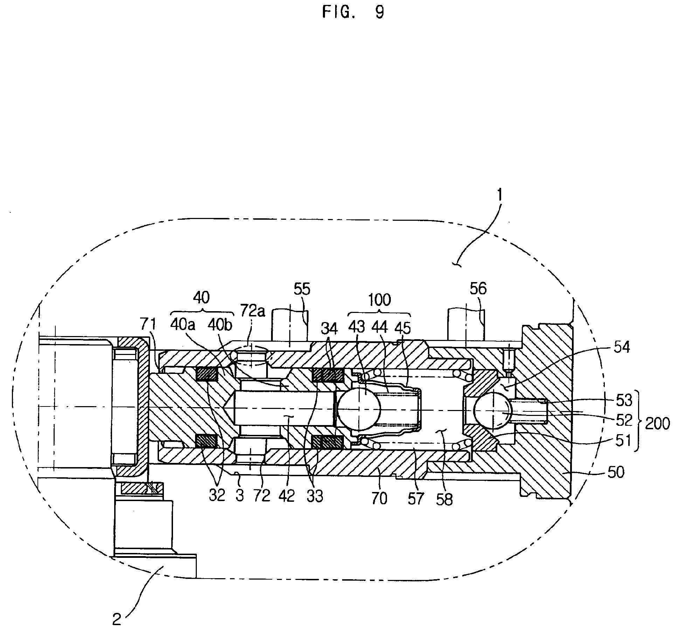

FIG. 7 is a sectional view of a pump for anti-lock brake systems, according to a third embodiment of the present invention. FIG. 8 is a sectional view of a pump for anti-lock brake systems, according to a first modification of FIG. 7. FIG. 9 is a sectional view of a pump for anti-lock brake systems, according to a second modification of FIG. 7. The pump for anti-lock brake systems according to the third embodiment of the present invention will be described in the following with reference to FIG. 7.

In the pump of the third embodiment, a piston 40 having a low-pressure piston part 40a and a high-pressure piston part 40b, is mounted in the bore 3 of the modulator block 1. The low-pressure piston part 40a and the high-pressure piston part 40b have equal diameters. The inlet check valve 100 is mounted to an end of the high-pressure piston part 40b. The plug 50 to which the outlet check valve 200 is mounted, is fitted into an end of the bore 3 to be opposite to the motor 2, thus closing the bore 3.

The piston 40 and the plug 50 are integrally assembled with each other by a sleeve 70. The sleeve 70 has a length enough to house the low-pressure piston part 40a, the high-pressure piston part 40b, and the inlet check valve 100 therein. At an end of the sleeve 70 which is adjacent to the motor 2 is provided a stop flange 71 to be bent toward the low-pressure piston part 40a. Further, one sealing member 76 is mounted on an outer circumferential surface of the sleeve 70 at a position corresponding to the low-pressure piston part 40a, thus preventing the brake oil from leaking through a gap between the bore 3 and the outer circumferential surface of the sleeve 70.

A stepped portion provided at an end of the sleeve 70 which is opposite to the stop flange 71 is fitted into the stepped portion of the plug 50 in the press-fitting method, so that the sleeve 70 is assembled with the plug 50.

Further, the sleeve 70 has an inlet hole 72 at a position corresponding to the inlet of the inlet path 42 which is formed between the low-pressure piston part 40a and the high-pressure piston part 40b. Thus, the brake oil flows into the inlet path 42 through the inlet port 55 provided on a predetermined portion of the modulator block 1 and the inlet hole 72.

The sleeve 70 is grooved or rounded at a portion 72a around the inlet hole 72, thus preventing the low-pressure part sealing member 32 and the high-pressure part sealing member 34 from being broken when the piston 40 is fitted into the sleeve 70.

Since the general construction of the pump shown in FIG. 7 remains the same as the pump of FIG. 4 except for the construction of the piston 40 and the sleeve 70, the general construction of the pump of FIG. 7 will not be described in detail.

The general construction of the pump shown in FIG. 8 remains the same as the pump of FIG. 7, except that a stop ring 80 serving as the stop flange 71 is fitted into a space between an end of the sleeve 70 and the low-pressure piston part 40a. The stop ring 80 is fitted into the space between an end of the sleeve 70 and the low-pressure piston part 40a while the piston 40 is set in the sleeve 70, thus limiting the piston 40 within the sleeve 70. The pump of FIG. 8 operates in the same manner as the pump of FIG. 7.

The general construction of the pump shown in FIG. 9 remains the same as the pump of FIG. 7, except that the sleeve 70 is mounted in the bore 3 without a sealing member. Thus, the pump of FIG. 9 will not be described herein in detail.

As is apparent from the above description, the present invention provides a pump for anti-lock brake systems which has a sleeve to guide a reciprocating motion of a piston, so that the piston and an inlet check valve are integrally assembled with the sleeve and are mounted in a bore of a modulator block, thus assembly is easier and faster.

Further, the pump for anti-lock brake systems of the present invention is mounted in the bore of the modulator block while the sleeve having the piston and the inlet check valve is assembled with a plug having an outlet check valve, thus the assembling process of the elements of the pump is still easier and faster.

In the pump for anti-lock brake systems according to the present invention, the piston has a low-pressure piston part and a high-pressure piston part which have different diameters. Thus, when the piston moves toward a motor to draw brake oil, a smaller amount of brake oil flows toward the motor, thus increasing an amount of brake oil drawn in the pump and thereby enhancing oil suction performance.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A pump for anti-lock brake systems, comprising:
a motor installed in a bore which is provided in a predetermined portion of a modulator block;
a plug mounted to an end of the bore to be opposite to the motor;
a piston provided in the bore to reciprocate in the bore by the motor; and
a sleeve fitted into the bore to guide a reciprocating motion of the piston.

2. The pump according to claim 1, wherein the piston comprises:
a low-pressure piston part provided at a predetermined position which is adjacent to the motor; and
a high-pressure piston part extending from the low-pressure piston part toward the plug, with an inlet path provided between the low-pressure piston part and the high-pressure piston part, and along the high-pressure piston part.

3. The pump according to claim 2, wherein the sleeve has, around an outer circumferential surface thereof, a step, so that the sleeve is fitted into the plug in a press-fitting method while surrounding an outer circumferential surface of the high-pressure piston part, and is mounted in the bore along with the plug.

4. The pump according to claim 3, further comprising a stop flange which is provided at an end of the sleeve to be bent toward the high-pressure piston part.

5. The pump according to claim 3, further comprising a stop part which is provided at an end of the sleeve, the stop part being thinner than the sleeve to be bent toward the high-pressure piston part.

6. The pump according to claim 3, wherein the low-pressure piston part has a smaller diameter than the high-pressure piston part.

7. The pump according to claim 3, further comprising an inlet check valve which is provided at an end of the high-pressure piston part, the inlet check valve and the piston being integrally assembled with the sleeve and mounted in the bore.

8. The pump according to claim 2, wherein the sleeve has, around an outer circumferential surface thereof, a step, so that the sleeve surrounds an outer circumferential surface of the lower-pressure piston part and an outer circumferential surface of the high-pressure piston part while being integrally fitted into the plug, and is mounted in the bore.

9. The pump according to claim 8, further comprising a stop flange which is provided at an end of the sleeve to be bent toward the low-pressure piston part.

10. The pump according to claim 8, further comprising an inlet hole which is provided on the sleeve at a position corresponding to an intermediate part between the low-pressure piston part and the high-pressure piston part, to communicate with the inlet path.

11. The pump according to claim 8, further comprising at least one groove which is provided around the outer circumferential surface of the sleeve so that a sealing member is fitted over the groove.

12. The pump according to claim 8, wherein the low-pressure piston part has a smaller diameter than the high-pressure piston part.

13. The pump according to claim 8, wherein the low-pressure piston part and the high-pressure piston part are separately produced and are fitted into the sleeve.

14. The pump according to claim 8, further comprising an inlet check valve which is provided at an end of the high-pressure piston part, the inlet check valve and the piston being integrally assembled with the sleeve and mounted in the bore.

15. The pump according to claim 8, wherein the low-pressure piston part and the high-pressure piston part have a same outer diameter and are fitted into the sleeve having a linear inner circumferential surface.

16. The pump according to claim 15, further comprising an inlet hole which is provided on the sleeve at a position corresponding to an intermediate part between the low-pressure piston part and the high-pressure piston part, to communicate with the inlet path, with a portion around the inlet hole being grooved.

17. The pump according to claim 15, further comprising a stop flange which is provided at an end of the sleeve to be bent toward the low-pressure piston part.

18. The pump according to claim 15, further comprising a stop ring which is fitted into a space between an end of the sleeve and the low-pressure piston part.

19. The pump according to claim 15, further comprising an inlet check valve which is provided at an end of the high-pressure piston part, the inlet check valve and the piston being integrally assembled with the sleeve and mounted in the bore.
